# EUROPEAN PATENT SPECIFICATION

(11) **EP 2 490 040 B1**
(45) Date of publication and mention of the grant of the patent: **17.08.2016**
(21) Application number: 11154814.5
(22) Date of filing: 17.02.2011
(51) Int. Cl.: G01S 13/08, G01S 13/88, G01F 23/284

(54) **Single conductor probe gwr system with reduced end of nozzle reflection**
Einzelleitersonde-GWR-System mit reduzierter Reflexion am Düsenende
Système de sonde GWR à conducteur unique doté d'une extrémité réduite de réflexion de la buse

(43) Date of publication of application: 22.08.2012
(73) Proprietor: Rosemount Tank Radar AB, 402 51 Göteborg (SE)
(72) Inventor: Edvardsson, Olov, 582 45 Linköping (SE)
(74) Representative: Kransell & Wennborg KB

(56) References cited:
- US-A1- 2001 050 629
- US-A1- 2009 303 106

## Description

### Technical Field of the Invention

The present invention relates to a radar level gauge system of the GWR (Guided Wave Radar) type for determining a filling level of a product contained in a tank.

### Technical Background

Radar level gauge (RLG) systems are in wide use for determining the filling level of a product contained in a tank. Radar level gauging is generally performed either by means of non-contact measurement, whereby electromagnetic signals are radiated towards the product contained in the tank, or by means of contact measurement, often referred to as guided wave radar (GWR), whereby electromagnetic signals are guided towards and into the product by a probe acting as a waveguide. The probe is generally arranged to extend vertically from the top towards the bottom of the tank. The probe may also be arranged in a measurement tube, a so-called chamber, that is connected to the outer wall of the tank and is in fluid connection with the inside of the tank.

The transmitted electromagnetic signals are reflected at the surface of the product, and the reflected signals are received by a receiver or transceiver comprised in the radar level gauge system. Based on the transmitted and reflected signals, the distance to the surface of the product can be determined.

More particularly, the distance to the surface of the product is generally determined based on the time between transmission of an electromagnetic signal and reception of the reflection thereof in the interface between the atmosphere in the tank and the product contained therein. In order to determine the actual filling level of the product, the distance from a reference position to the surface is determined based on the above-mentioned time (the so-called time-of-flight) and the propagation velocity of the electromagnetic signals.

Most radar level gauge systems on the market today are either so-called pulsed radar level gauge systems that determine the distance to the surface of the product contained in the tank based on the difference in time between transmission of a pulse and reception of its reflection at the surface of the product, or systems that determine the distance to the surface based on the phase difference between a transmitted frequency-modulated signal and its reflection at the surface. The latter type of systems are generally referred to as being of the FMCW (Frequency Modulated Continuous Wave) type.

In any case, the propagated electromagnetic signal is typically not only reflected at the impedance transition constituted by the interface between atmosphere and surface, but at several other impedance transitions encountered by the signal. In the case of a GWR-system, one such impedance transition typically occurs at the connection between the transceiver and the probe. Generally, the transceiver is located outside the tank, and is connected to the probe via a feed-through going through a wall (typically the roof) of the tank.

Such a feed-through is typically formed by a coaxial line having the probe as its inner conductor, the tank wall or a connection piece that is attached to the tank as its outer conductor, and a dielectric member provided between the inner and outer conductors.

Due to the combined need for a sufficiently mechanically strong inner conductor conductor and a practical outer conductor diameter, a feed-through impedance much above about 50 Ω is seldom feasible. Hence, because of its structure, the impedance of the feed-through is generally similar to that of a typical coaxial cable, that is, about 50 Ω.

Since the impedance of the probe is typically considerably higher (about 200-300Ω for a twin line probe and about 300-400 Ω for a single line probe) there will be a relatively large impedance step where the feed-through ends and the probe enters the tank.

As explained above, this impedance transition partly reflects the transmitted electromagnetic signal, giving rise to an echo signal which may be substantially stronger than the surface echo signal resulting from reflection of the transmitted signal at the surface of the product contained in the tank, especially when the product to be gauged is a material that yields a relatively weak echo signal. Examples of products yielding relatively weak echo signals are liquid natural gas (LNG), liquid petroleum gas (LPG), oil-based products, solids such as plastic pellets or grain etc.

This may in turn make it difficult to determine the filling level when the surface of the product is close to the ceiling of the tank, and may, furthermore, reduce the maximum measurable distance (minimum measurable filling level) because of the loss of signal that occurs at the impedance transition between the feed-through and the probe.

For instance, for the situation described above, with an impedance transition from the 50Ω impedance of the feed-through to the 300Ω impedance of a single line probe, only about 25% of the transmitted power is available to return to the transceiver after having passed the impedance transition going out and coming back. If the impedance transition is reduced from 1:6 to 1:2, 80% of the power returns. The difference in maximum measurable distance between these cases can be as much as 10 meters.

A radar level gauge system is often mounted on a so-called nozzle at the top of the tank. (The nozzle may typically be a pipe that is welded to the tank and fitted with a flange at its upper end to allow attachment of an instrument, such as a radar level gauge system, or a blind flange. The inner diameter of the nozzle may typically be between 0.1 and 0.2 m, and a typical length is around 0.5 m.) In such cases, the probe is typically mechanically connected to the tank at the top of the nozzle, and passes through the nozzle before entering the tank itself. At the top of the nozzle, the probe may be electrically connected to the transceiver of the radar level gauge system through a feed-through that passes through the tank boundary.

For single conductor probes, sometimes also referred to as Goubau-probes, it has been found that propagation of the electromagnetic signal that is guided by the probe is affected by the nozzle, especially when the nozzle is relatively narrow and high.

As a result, a second impedance transition occurs at the end of the nozzle, where there is a sudden transition between the impedance of a (coaxial) transmission line formed by the probe and the nozzle wall and the free-space propagation properties of the probe inside the tank itself.

This impedance transition at the end of the nozzle may disturb filling level measurements in a similar way as described above for the impedance transition at the transition from feed-through to probe. In addition, multiple reflections between the two impedance transitions (at the feed-through and at the end of the nozzle) might lead to additional echo signals, which may disturb the filling level measurement relatively far below the end of the nozzle.

According to US 6 690 320 the problems caused by the reflection at the end of the nozzle are solved by providing a coaxial extension inside the nozzle until after the probe exits the nozzle, so that the probe with the coaxial extension has the same impedance as the feed line between the transceiver and the probe. With this configuration, there is in effect no single conductor probe inside the nozzle, but the single conductor probe starts below the nozzle, where the coaxial extension ends. As a result, there will be only one large impedance step, but since this impedance step is located below the end of the nozzle, the zone at the top of the tank where reliable filling level measurements cannot be performed (the so-called deadzone) will start at the end of the nozzle, and will still be significant. Furthermore, there will still be a significant loss of signal, which limits the maximum measurable distance.

### Summary of the Invention

In view of the above-mentioned and other drawbacks of the prior art, a general object of the present invention is to provide an improved radar level gauge system, and in particular a guided wave radar level gauge system of the single conductor probe type, which is suitable for use in a situation where the probe passes through a nozzle when installed at a tank.

According to the present invention, these and other objects are achieved through a radar level gauge system, for determining a filling level of a product contained in a tank, the radar level gauge system comprising: a transceiver arranged outside the tank for generating, transmitting and receiving electromagnetic signals; a single conductor probe arranged inside the tank and electrically connected to the transceiver via a feed-through arranged at the top of a nozzle of the tank, the single conductor probe extending through the nozzle towards and into the product contained in the tank, for guiding a transmitted signal from the transceiver towards a surface of the product, and for returning a surface echo signal resulting from reflection of the transmitted signal at the surface back towards the transceiver; an impedance matching arrangement provided to the probe and extending along a portion of the probe; and processing circuitry connected to the transceiver for determining the filling level based on the surface echo signal, wherein an extension of the impedance matching arrangement, in a direction perpendicular to the probe, changes with increasing distance from the feed-through with a first rate of change inside the nozzle, and changes with increasing distance from the feed-through with a second negative rate of change below the nozzle, the second rate of change being more negative than the first rate of change.

The tank may be any container or vessel capable of containing a product, and may be metallic, or partly or completely non-metallic, open, semi-open, or closed.

The "transceiver" may be one functional unit capable of transmitting and receiving electromagnetic signals, or may be a system comprising separate transmitter and receiver units.

The single conductor probe may be essentially rigid or flexible and may be made from metal, such as stainless steel, plastic, such as PTFE, or a combination thereof.

The nozzle may be a tube-shaped extension of the tank that extends above the roof of the tank itself and that provides an opening into the tank when a lid of the nozzle is removed. Accordingly, the boundary between the inside of the tank and the outside of the tank includes the wall and lid of the nozzle.

When the radar level gauge system is arranged in such a way that the probe passes through a nozzle, the probe will be within the tank inside the nozzle as well as below the nozzle, but inside the nozzle, the distance from the probe to the (conductive) wall of the nozzle will be considerably shorter than the distance between the probe and the tank wall below the nozzle.

The present invention is based on the realization that the determination of filling levels close to the tank ceiling can be improved (which means that the so-called deadzone can be reduced) by locally reducing the radial extension of the electromagnetic field resulting from the transmitted electromagnetic signal within the nozzle, and then gradually go from the impedance inside the nozzle to the impedance of the probe in the tank itself, below the nozzle.

Hereby, the influence of the nozzle can be removed while at the same time enabling the determination of filling levels closer to the top of the tank.

With the configuration according to US 6 690 320, multiple reflections may be removed, but the reference pulse for indicating the top of the probe is moved from the feed-through to a position below the end of the nozzle, which means that the deadzone will start well below the end of the nozzle rather than at the feed-through.

Through the radar level gauge system according to the various embodiments of the present invention, the reflection at the end of the nozzle can be removed or at least significantly reduced, and the impedance matching arrangement can be configured such that a reference pulse for filling level measurement is obtained at the feed-through. Moreover, due to the reduced difference in impedance between the feed-through and the probe inside the nozzle, there will be reduced signal loss due to the reference reflection.

This improves the near zone filling level detection (reduces the deadzone) as well as increases the maximum detection distance.

To achieve a sufficiently smooth impedance transition below the nozzle, the impedance matching arrangement may advantageously be arranged to extend along the probe below the nozzle for a distance corresponding to at least a quarter of a wavelength at a center frequency of the transmitted signal, and along this distance having a radial extension that decreases to close to zero.

Through a decrease in radial extension to close to zero over a distance corresponding to at least a quarter of the wavelength of the transmitted signal, an impedance transition can be achieved that may be sufficiently smooth for many applications. To achieve a more wideband impedance matching, the decrease in radial extension of the impedance matching arrangement may advantageously take place over a longer distance along the probe below the nozzle, such as over a distance corresponding to at least half the wavelength of the transmitted signal, or, for providing impedance matching across an even wider bandwidth, over a distance corresponding to at least the wavelength of the transmitted signal.

Furthermore, the impedance matching arrangement may advantageously be configured to reduce (compared to propagation along the probe in free space) the radial extension of the electromagnetic field of the transmitted electromagnetic signal inside the nozzle while allowing penetration of the electromagnetic field into the interior of the nozzle between the impedance matching arrangement and a nozzle wall.

Hereby the entire probe, even inside the nozzle, can be used for determining the distance to the surface of the product even if the surface would be inside the nozzle or very close to the nozzle. This even further reduces the deadzone at the top of the tank.

The impedance matching arrangement may advantageously be configured to provide an impedance step (a distinct non-zero impedance transition) at the feed-through. Hereby, a reference echo pulse can still be obtained as high up as possible in the tank and with a reduced amplitude, reducing the deadzone and increasing the maximum detection distance.

According to one embodiment of the radar level gauge system of the present invention, the first rate of change of the extension of the impedance matching arrangement in a direction perpendicular to the probe may be zero, such that the radial extension of the impedance matching arrangement is constant at least along a portion of the probe inside the nozzle.

Alternatively, the first rate of change might be negative or even positive, as long as the radial extension of the electromagnetic field resulting from the transmitted electromagnetic signal is sufficiently reduced past the end of the nozzle such that there is no, or only a small, impedance step at the end of the nozzle.

The extension perpendicular to the probe of the impedance matching arrangement may decrease linearly or non-linearly below the nozzle. A nonlinear decrease may result in a shorter impedance matching arrangement (along the probe), which may be advantageous.

Furthermore, the extension perpendicular to the probe of the impedance matching arrangement may decrease essentially continuously below the nozzle, whereby a continuous impedance transition can be achieved.

Alternatively, the extension perpendicular to the probe of the impedance matching arrangement may decrease stepwise below the nozzle.

In the latter case, each step may advantageously have a length along the probe substantially corresponding to a quarter of a center wavelength of the transmitted signal.

Moreover, the impedance matching arrangement may include a dielectric material, which may advantageously be a dielectric material having similar electrical properties as dielectric materials provided in the feed-through.

Furthermore, the impedance matching arrangement may comprise a conductive member, which may make the impedance matching arrangement capable of withstanding higher temperatures. Through suitable dimensioning, such a conductive member can be made essentially electrically equivalent to a dielectric member, in respect of its microwave transmission properties. In other words, such conductive member(s) can be seen as an "artificial dielectric".

Using one or several conductive members, the impedance matching arrangement may, for example, be formed from sheet metal and can thus be made low-cost, and can easily be attached to the probe, for example by clamping. The one or several conductive members may be in galvanic contact with the probe at several points along the probe.

To improve its electrical properties (mimicking dielectric), the metal plate may be provided with at least one cut-out. For example, one or several cut-outs may be provided as a perforation pattern in the interior of the conductive plate and/or one or several cut-outs may be provided at the periphery of the conductive plate.

The conductive member may, for example, have two "wings", symmetrically provided in relation to the probe. Alternatively, the conductive member may have additional symmetrically arranged "wings". Such a conductive member, may, for instance, be manufactured from more than one piece of sheet metal. With additional "wings", the maximum lateral extension of the impedance matching arrangement can be reduced as compared to the case with only two "wings".

### Brief Description of the Drawings

These and other aspects of the present invention will now be described in more detail, with reference to the appended drawings showing a currently preferred embodiment of the invention, wherein:
Fig 1 a schematically illustrates an exemplary radar level gauge system installed in a tank;
Fig 1b is a schematic illustration of the measurement electronics unit comprised in the radar level gauge system in fig 1a including a schematic feed-through;
Fig 2a is a schematic cross-section view of a feed-through and a portion of a probe, comprised in an exemplary prior art radar level gauge system;
Fig 2b schematically illustrates an exemplary echo profile for a pulsed radar level gauge system such as that in fig 2a without any impedance matching arrangement;
Fig 3a is a schematic cross-section view of a feed-through and a portion of a probe provided with an impedance matching arrangement, comprised in a radar level gauge system according to an embodiment of the present invention;
Fig 3b schematically illustrates an exemplary echo profile for a pulsed radar level gauge system such as that in fig 3a;
Fig 4a schematically illustrates a single conductor probe and impedance matching arrangement comprised in a radar level gauge system according to an embodiment of the present invention;
Fig 4b is a diagram schematically illustrating the impedance transition from feed-through impedance to probe impedance for the arrangement in fig 4a;
Figs 5a-d schematically illustrate different exemplary impedance matching arrangements included in radar level gauge systems according to embodiments of the present invention; and
Fig 6 is a diagram showing the dependence of the "field diameter" of the electric field on the thickness of dielectric provided on a single conductor probe.

### Detailed Description of a Example Embodiment of the Invention

In the present detailed description, various embodiments of the radar level gauge system according to the present invention are mainly discussed with reference to a pulsed guided wave radar (GWR) level gauge system utilizing a rigid single line probe. It should be noted that this by no means limits the scope of the present invention, which is equally applicable to GWR-systems being equipped with flexible probes, etc.

Furthermore, reference is mainly made to filling level determination through measuring the time between transmitted and reflected pulses. As is, however, evident to the person skilled in the relevant art, the teachings of the present invention are equally applicable to radar level gauge systems utilizing phase information for determining the filling level through, for example, frequency-modulated continuous wave (FMCW) measurements.

When pulses modulated on a carrier are used, phase information can also be utilized.

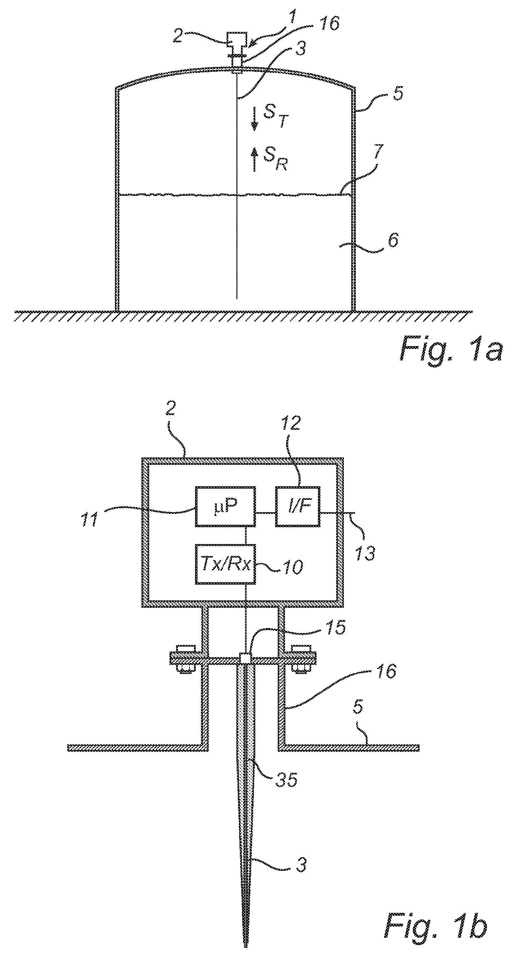

Fig 1 a schematically illustrates a radar level gauge system 1 according to an embodiment of the present invention, comprising a measurement electronics unit 2, and a probe 3. The radar level gauge system 1 is installed on a nozzle 16 at the top of a tank 5, which is partly filled with a product 6 to be gauged. The probe 3 passes through the nozzle before entering the tank itself. By analyzing transmitted signals S_{T} being guided by the probe 3 towards the surface 7 of the product 6, and reflected signals S_{R} traveling back from the surface 7, the measurement electronics unit 2 can determine the distance between a reference position (such as the tank ceiling) and the surface 7 of the product 6, whereby the filling level can be deduced. It should be noted that, although a tank 5 containing a single product 6 is discussed herein, the distance to any material interface along the probe can be measured in a similar manner.

As is schematically illustrated in fig 1b, the electronics unit 2 comprises a transceiver 10 for transmitting and receiving electromagnetic signals, a processing unit 11, which is connected to the transceiver 10 for control of the transceiver and processing of signals received by the transceiver to determine the filling level of the product 6 in the tank 5. The processing unit 11 is, furthermore, connectable to external communication lines 13 for analog and/or digital communication via an interface 12. Moreover, although not shown in fig 1b, the radar level gauge system 1 is typically connectable to an external power source, or may be powered through the external communication lines 13. Alternatively, the radar level gauge system 1 may be configured to communicate wirelessly.

Also indicated in fig 1b is an impedance matching arrangement 35 which is provided to the probe 3 along a portion thereof. The impedance matching arrangement 35 extends from the feed-through 15 and has, as is schematically indicated in fig 1b a first configuration inside the nozzle 16 and a second configuration below the nozzle 16. Inside the nozzle 16, the purpose of the impedance matching arrangement 35 is to reduce the radial extension of the electromagnetic field resulting from the transmitted electromagnetic signal S_{T}, in order to remove or at least significantly reduce the influence of the nozzle on the propagation of the transmitted (and the reflected) electromagnetic signal. Therefore, the exact configuration of the impedance matching arrangement 35 inside the nozzle 16 is not so important, as long as this purpose is achieved. Below the nozzle 16, the purpose of the impedance matching arrangement 35 is to provide a smooth impedance transition from the impedance of the probe 3 and impedance matching arrangement 35 inside the nozzle to the impedance of the (naked) probe 3 inside the tank itself. Therefore, the extension perpendicular to the probe 3 of the impedance matching arrangement 35 gradually decreases below the nozzle 16.

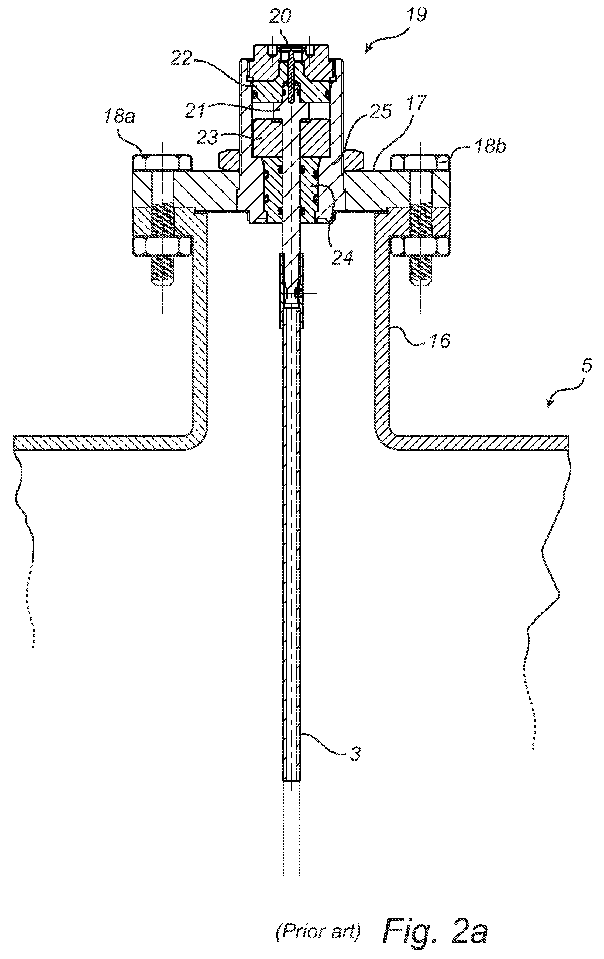

Fig 2a is a schematic cross-section view of a feed-through and a portion of a probe, comprised in an exemplary prior art radar level gauge system.

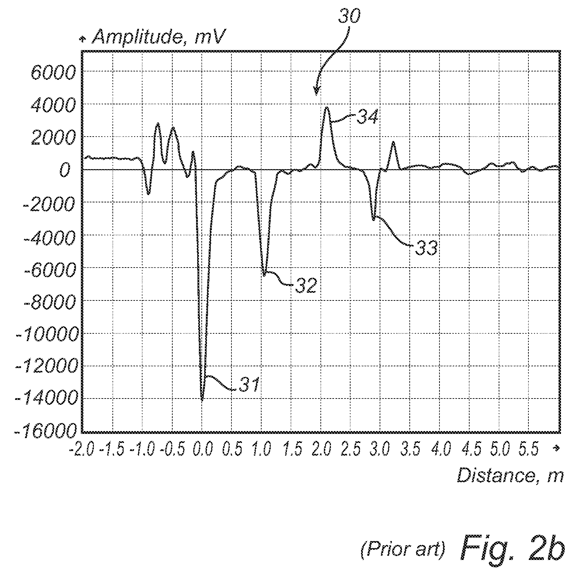

In fig 2a, a single line probe 3 is shown mounted to a tank 5 having a nozzle 16 provided on the roof thereof. The probe 3 is mechanically connected to a flange 17 which is attached to the nozzle through bolts 18a-b. In the flange 17, a feed-through assembly 19 is provided for mechanically connecting the probe 3 to the tank 5 via the flange 17 and for electrically connecting the probe to the measurement electronics (not shown in fig 2) provided outside the tank 5. The feed-through assembly 19 also typically provides a gas-tight seal between the inside and the outside of the tank 5.

The connection to the measurement electronics (more specifically to the transceiver 10 comprised in the measurement electronics unit 2) is achieved through a coaxial connector 20 at the top of the feed-through assembly 19.

As is illustrated in fig 2a, the probe 3 is mechanically connected to the tank 5 by clamping a cylindrical protrusion 21 provided on the probe 3 between upper 22 and lower 23 dielectric members inside a metallic support member 25. Below the lower dielectric member 23 a further dielectric member 24 is provided. Accordingly, the microwave transmission line constituted by the probe 3, the dielectric members 22, 23, 24 and the metallic support member 25 typically has the electrical properties of a coaxial transmission line, including an impedance of about 50Ω. Below the feed-through assembly 19, inside the tank 5, the probe 3, in the present example, still extends through a coaxial arrangement with the tank atmosphere as the dielectric and the nozzle 16 as the outer conductor. However, this coaxial arrangement has a significantly higher impedance than that of the feed-through, depending on the distance between the probe 3 and the nozzle wall, so that there is an abrupt impedance transition at the bottom of the feed-through.

Where the probe 3 exits the nozzle 16, there will be a second abrupt impedance transition between the impedance of the probe-nozzle coaxial arrangement and the impedance of the probe 3 inside the tank itself.

These impedance transitions result in strong echo signals as is illustrated for a pulsed radar level gauge system in fig 2b.

Fig 2b is a diagram schematically illustrating an exemplary echo profile 30 obtained using the radar level gauge configuration shown in fig 2a. As can be seen in fig 2b, the echo profile 30 includes a first strong negative echo signal 31, which results from reflection of the transmitted electromagnetic signal at the impedance transition where the probe 3 leaves the feed-through assembly 19 as shown in fig 2a, and a second strong negative echo signal 32, which results from reflection of the transmitted electromagnetic signal at the impedance transition at the end of the nozzle 16. The echo profile 30 also includes an additional negative echo signal 33 resulting from multiple reflections between the feed-through and the end of the nozzle 16.

Additionally, the echo profile 30 includes a surface echo signal 34 at a distance of about 2 meters from the impedance transition between the feed-through assembly 19 and the probe 3. As is evident from fig 2b, both the echo signal 31 resulting from reflection at the transition between feed-through and probe 3 and the echo signal 32 resulting from reflection at the end of the nozzle 16 are considerably stronger than the surface echo signal 34, which typically limits the ability to measure the distance to the surface 7 of the product 6 in the tank 5 in a zone near the roof of the tank 5. Depending on the magnitude of the echo signals resulting from multiple reflections, the so-called deadzone might be extended even further.

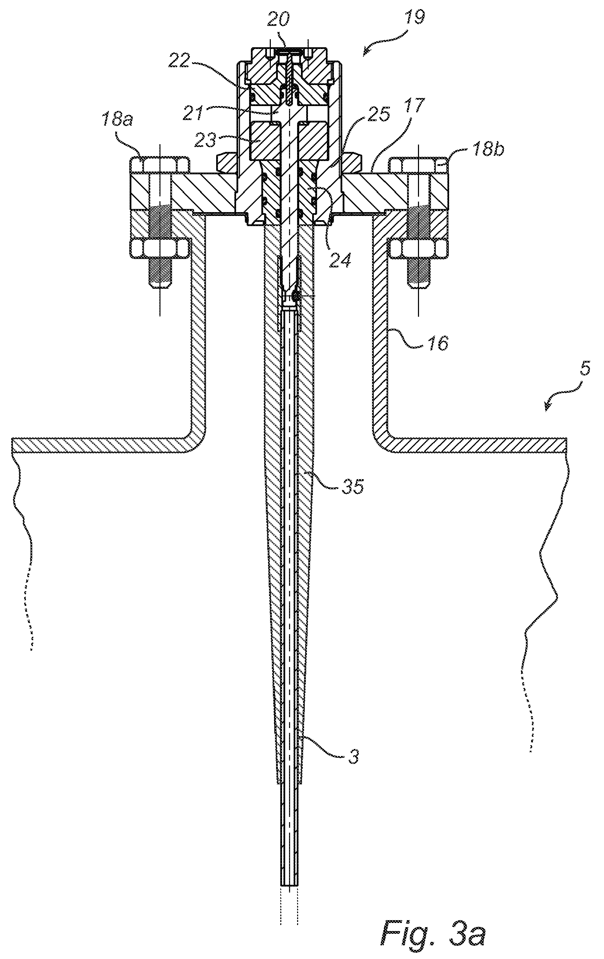

Having now briefly described a known arrangement without any means for reducing the influence of the nozzle 16, an embodiment of the radar level gauge system according to the invention, including an impedance matching arrangement 35 provided to the probe 3 inside the tank 5 will now be described with reference to figs 3a-b.

Fig 3a is a schematic cross-section view of a feed-through and a portion of a probe provided with an impedance matching arrangement, comprised in a radar level gauge system according to an embodiment of the present invention.

The partial radar level gauge system illustrated in fig 3a differs from that shown in fig 2a in that an impedance matching arrangement, here in the form of a dielectric member 35 is provided around the probe 3 inside the tank 5. This dielectric sleeve 35 may, for example, be provided as a continuation of the previously mentioned dielectric member 24 inside the feed-through assembly 19, or may be provided as one or several separate dielectric member(s). For example, the upper portion 36a of the impedance matching arrangement 35 inside the nozzle 16, and the lower portion 36b of the impedance matching arrangement 35 below the nozzle 16 may be provided as separate dielectric parts. Furthermore, the impedance matching arrangement 35 need not be provided as a dielectric sleeve as is schematically indicated in fig 3a, but may be provided as one or several suitably shaped dielectric slabs attached to the probe 3.

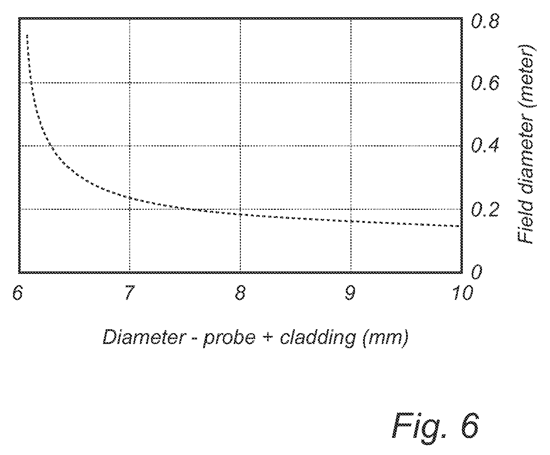

For the upper portion 36a of the impedance matching arrangement 35, the important property is to reduce the radial extension of the electromagnetic field resulting from the transmitted electromagnetic signal so as to reduce the influence of the conductive wall of the nozzle 16. As an illustrative example, a dielectric layer (made of PTFE) with a thickness of more than about 2 mm provided around a conductive probe with a diameter of 6 mm would result in a sufficient reduction in the radial extension of the electromagnetic field, as will be explained further below with reference to fig 6

As for the lower portion 36b of the impedance matching arrangement 35, the purpose is to achieve a gradual transition from the impedance of the probe 3 inside the nozzle to the impedance of the probe below the impedance matching arrangement 35. One way of achieving this would be to gradually reduce the thickness of the above-mentioned dielectric layer to zero over a distance of about 0.6 - 0.8 m along the probe, depending on the wavelength of the transmitted electromagnetic signal and the type of signal processing used. Depending on the requirements of the particular application, shorter distances may result in a sufficiently good matching between the impedance of the probe 3 inside the nozzle 16 and the impedance of the probe 3 below the impedance matching arrangement 35.

Through its decreasing lateral extension along the probe 3, the lower portion 36b of the impedance matching arrangement 35 provides a wideband impedance matching between the impedance of the probe 3 inside the nozzle 16 and the impedance of the probe 3 in free space below the impedance matching arrangement 35, which considerably reduces the reflection at the end of the nozzle 16.

Since the echo signal obtained at the interface between the feed-through 19 and the probe 3 is advantageously used as a reference marker from which the distance to the surface 7 of the product 6 can be determined, it may be desirable to keep a rather sharp, but small impedance transition where the feed-through assembly 19 ends. This may be achieved through proper design of the impedance matching arrangement 35, for example by providing a notch in the device or spacing it apart slightly from the dielectric member 24 in the feed-through assembly 19.

Those skilled in the art will realize that the impedance matching arrangement 35 must not necessarily be provided in the form of a sleeve surrounding the probe 3, but may alternatively be provided in the form of one or several dielectric slabs clamped to the probe 3. Because of the very small diameter (in the order of mm) of the probe 3 compared to the wavelength (in the order of dm) of the transmitted electromagnetic signal, the exact shape of the impedance matching arrangement 35 is not critical, as long as a sufficient reduction of the radial extension of the electromagnetic field is achieved inside the nozzle 16, and a smooth impedance transition is achieved below the nozzle 16. For this, it is sufficient that the radial extension of the impedance matching arrangement 35 inside the nozzle 16 is large enough to reduce the radial extension of the electromagnetic field sufficiently, and that the radial extension of the impedance matching arrangement 35 below the nozzle 16 decreases gradually over a sufficiently long distance, which should preferably be at least corresponding to a quarter of the wavelength of the transmitted electromagnetic signal.

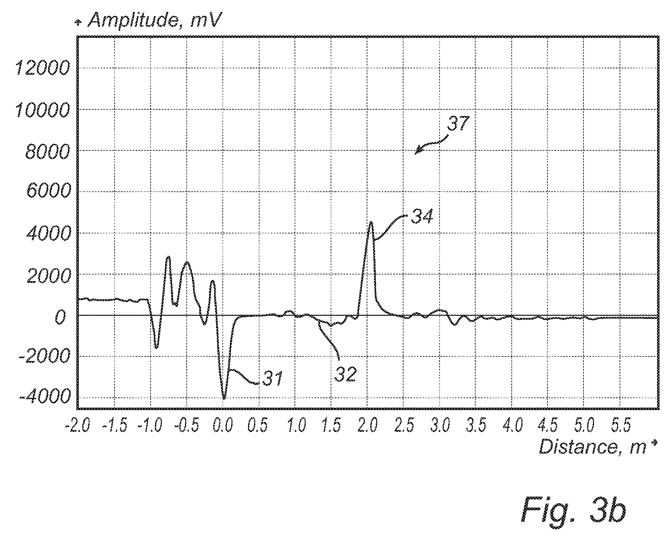

Turning now to fig 3b, which shows an exemplary echo profile 37 obtained using the arrangement of fig 3a, it can be seen that the provision of the impedance matching arrangement 35 has practically removed the echo signal 32 resulting from reflection at the end of the nozzle 16 and echoes from multiple reflections (compare with the situation in fig 2b). As is also clear from a comparison between figs 2b and 3b, the signal loss at the impedance transition between feed-through 19 and probe 3 has been greatly reduced, which leads to a considerably stronger surface echo signal 34 and an increased range of the radar level gauge system.

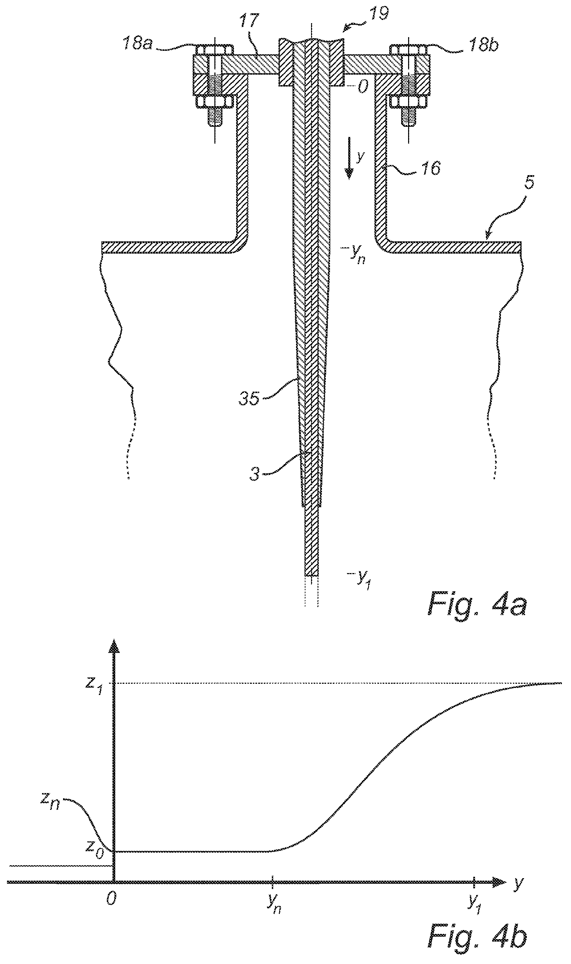

Below, an exemplary impedance profile along the probe will be described with reference to figs 4a-b that schematically illustrate a single conductor probe 3 with an impedance matching arrangement 35 and a representative impedance transition from the impedance Z₀ of the feed-through assembly 19 to the impedance Z₁ of the single-line probe 3 in free space.

Fig 4a shows a probe 3 connected to a nozzle 16 of a tank 5 via a feed-through 19 provided in a flange 17, but in considerably less detail than in fig 3a. Referring to fig 4a, the impedance matching arrangement 35 starts where the feed-through 19 ends at y=0, and extends along the probe 3 towards the interior of the tank 5 until y=y₁ where the probe 3 extends in free space towards the product 6 contained in the tank 5.

As is schematically illustrated in fig 4b, the impedance at y < 0 corresponds to the feed-through impedance, denoted Z₀, and the impedance at y₁ corresponds to the probe impedance, denoted Z₁.

As can be seen in fig 4b, the impedance increases abruptly at y=0 from the impedance Z₀ of the feed-through to the impedance Zₙ of the probe 3 inside the nozzle 16. The (rather small) step from Z₀ to Zₙ is intentional and is provided in order to provide a reference echo pulse marking the top of the probe. In the exemplary embodiment that is schematically illustrated in figs 4a-b, the impedance is then approximately constant until yₙ, which marks the end of the nozzle 16. From yₙ and until the end of the impedance matching arrangement 35 at y₁, the impedance gradually increases to Z₁.

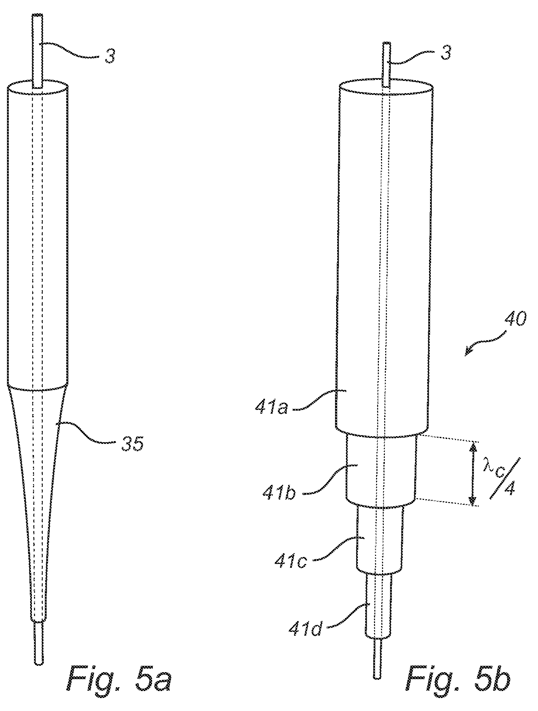

Although the impedance matching arrangement 35 has so far only be described with reference to various types of dielectric members with a continuously varying radial extension, it is evident to the person skilled in the art that several other configurations are possible and may be advantageous depending on application. A number of exemplary configurations will be described below with reference to figs 5a-d.

Fig 5a schematically illustrates the above-described configuration with a hollow conically shaped dielectric member 35 provided around a single line probe 3.

Fig 5b illustrates an alternative dielectric impedance matching arrangement 40, comprising four cylindrical segments 41a-d with decreasing diameter towards the free end of the probe 3. Each cylindrical segment 41 a-d may advantageously have a length of about a quarter of a wavelength of the center frequency of the signal to be transmitted by the transceiver 10 and guided along the probe 3. Hereby, a wideband impedance transition can be achieved. Providing a longer impedance matching arrangement with additional cylindrical segments, an even larger bandwidth can be achieved.

For a pulsed radar level gauge system of the guided wave radar (GWR) type, pulses having a pulse width of about 1 ns may typically be used. A 1 ns pulse generally corresponds to a frequency range of about 0.1 GHz to 1 GHz. It is expected that an impedance matching arrangement having about 6 to 8 quarter wavelength segments (with respect to the center frequency) will result in a good impedance matching over this entire range.

As an alternative to providing the impedance matching arrangement as one or several dielectric member(s), it can instead be provided as one or several suitably shaped conductive members, such as metal sheets, which, depending on application may be an attractive alternative whereby a truly low-cost impedance matching can be achieved.

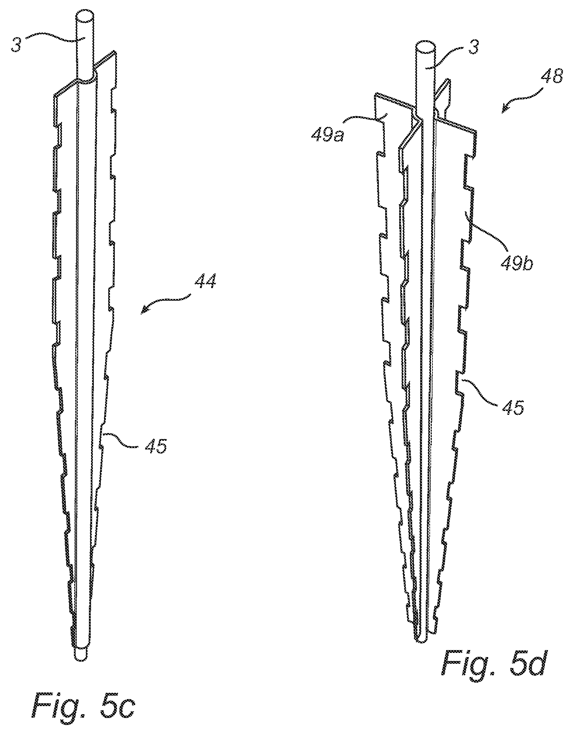

In fig 5c a first exemplary embodiment of such a conductive impedance matching arrangement 44 is shown attached to a single line probe 3. The impedance matching arrangement 44 in fig 5c has a number of cut-outs 45 (only one is here indicated with a reference numeral) provided thereto to increase the longitudinal inductance of the device 44. Through the configuration schematically shown in fig 5c, the electrical behavior of the metal sheet impedance matching arrangement 44 can be made similar to that of the dielectric cone 35 in fig 5a in the relevant frequency range (GHz).

In fig 5d, an alternative electrically conductive impedance matching arrangement 48 is provided, comprising two metal sheets 49a-b that are attached to the probe 3 in such a way that an impedance matching arrangement with four "wings" are formed. Hereby, a smaller maximum lateral dimension can be achieved as compared to the impedance matching arrangement 44 in fig 5c, which enables insertion through a narrower tank nozzle. Similarly to the impedance matching arrangement 44 in fig 5c, the impedance matching arrangement 48 in fig 5d is also provided with cut-outs 45.

It should be noted that figs 5a-d only illustrate a few representative exemplary embodiments of the impedance matching arrangement comprised in the radar level gauge system according to the present invention, and that the skilled person could easily consider various variations of these embodiments.

The reduction of the radial extension of the electromagnetic field obtainable by coating a metal single conductor probe with a layer of dielectric is schematically illustrated in fig 6.

Fig 6 is a diagram showing the dependence of the "field diameter" of the electric field on the thickness of dielectric provided on a single conductor probe. By "field diameter" is here meant the diameter of a cylinder within which 80% of the power is transported.

In the exemplary case that is illustrated in fig 6, the probe 3 (referring for example to fig 3a or fig 4a) is a 6 mm stainless steel wire, and the frequency of the signal transmitted along the probe 3 is 1 GHz. Furthermore, the dielectric is PTFE.

The purpose of fig 6 is merely to illustrate the efficiency of the reduction in field diameter that can be achieved by providing a dielectric (or a conductive member configured to mimic a dielectric) to the single conductor probe. For the exemplary case of a dielectric cladding made of PTFE, and a 6 mm stainless steel probe, it can be deduced from fig 6 that a thickness of the dielectric of about 2 mm, resulting in a total diameter of 8 mm, would result in a field diameter that is less than 0.2 m.

Obviously, the actual configuration of the impedance matching arrangement may be adapted to the application. It will be straight-forward to those skilled in the art to, for example, dimension the impedance matching arrangement for another dielectric than PTFE or for the use of one or several conductive members for mimicking the electrical behavior of the dielectric.

## Claims

1. A tank arrangement comprising:
a tank (5) having a nozzle (16); and
a radar level gauge system (1), for determining a filling level (7) of a product (6) contained in said tank (5), said radar level gauge system (1) comprising:
a transceiver (10) arranged outside said tank for generating, transmitting and receiving electromagnetic signals;
a single conductor probe (3) arranged inside said tank and electrically connected to said transceiver via a feed-through (15; 19) arranged at the top of the nozzle (16) of said tank, said single conductor probe (3) extending through the nozzle (16) towards and into said product contained in the tank, for guiding a transmitted signal (S_{T}) from said transceiver towards a surface of said product, and for returning a surface echo signal (S_{R}) resulting from reflection of said transmitted signal at said surface back towards said transceiver;
an impedance matching arrangement (35; 40; 44; 48) provided to the probe (3) and extending along a portion of the probe; and
processing circuitry (11) connected to said transceiver (10) for determining said filling level based on said surface echo signal,
wherein an extension of said impedance matching arrangement (35; 40; 44; 48), in a direction perpendicular to said probe (3) changes with increasing distance from the feed-through (15; 19) with a second, negative rate of change below said nozzle (16) over a distance corresponding to at least a quarter of a wavelength of the transmitted signal (S_{T}), **characterized in that**:
the radial extension of said impedance matching arrangement (35; 40; 44; 48) is constant or changes with increasing distance from the feed-through (15; 19) with a first rate of change inside said nozzle (16), said first rate of change being more positive than said second rate of change; and
said impedance matching arrangement, inside said nozzle, has a sufficiently large radial extension to remove or at least significantly reduce an influence of said nozzle on said transmitted signal.

2. The tank arrangement according to claim 1, wherein said impedance matching arrangement (35; 40; 44; 48) is configured to provide an impedance step at an interface between said feed-through (15; 19) and said probe (3).

3. The tank arrangement according to claim 1 or 2, wherein the radial extension of said impedance matching arrangement is substantially constant from said feed-through to an end of said nozzle.

4. The tank arrangement according to any one of the preceding claims, wherein, below said nozzle (16), said extension in the direction perpendicular to the probe (3) of the impedance matching arrangement (35; 40; 44; 48) decreases non-linearly with increasing distance from said feed-through (15; 19).

5. The tank arrangement according to any one of the preceding claims, wherein said impedance matching arrangement (35; 40; 44; 48) at least partly surrounds said probe (3).

6. The tank arrangement according to any one of the preceding claims, wherein said extension of the impedance matching arrangement (35; 44; 48), in said direction perpendicular to said probe (3), decreases continuously below the nozzle (16).

7. The tank arrangement according to any one of claims 1 to 5, wherein said extension of the impedance matching arrangement (40), in said direction perpendicular to said probe (3), decreases in steps below the nozzle (16).

8. The tank arrangement according to claim 7, wherein each step has a length along the probe (3) substantially corresponding to a quarter of a wavelength at a center frequency of the transmitted signal (S_{T}).

9. The tank arrangement according to any one of the preceding claims, wherein said impedance matching arrangement (35; 40) comprises a dielectric material.

10. The tank arrangement according to claim 9, wherein said impedance matching arrangement (35; 40) is made of a dielectric material.

11. The tank arrangement according to any one of claims 1 to 9, wherein said impedance matching arrangement (44; 48) comprises a conductive member (44; 49a-b).

12. The tank arrangement according to claim 11, wherein said conductive member (44; 49a-b) is provided as a metal plate having a plurality of cut-outs (45) formed therein.

## Patentansprüche

1. Tankanordnung, welche umfasst:
einen Tank (5), der eine Düse (16) aufweist; und
ein Radar-Füllstandssensorsystem (1) zum Bestimmen eines Füllstands (7) eines in dem Tank (5) enthaltenen Produkts (6), wobei das Radar-Füllstandssensorsystem (1) umfasst:
einen Sendeempfänger (10), der außerhalb des Tanks angeordnet ist, zum Erzeugen, Senden und Empfangen von elektromagnetischen Signalen;
eine Einzelleitersonde (3), die innerhalb des Tanks angeordnet ist und mit dem Sendeempfänger elektrisch über eine Durchführung (15; 19) verbunden ist, die an der Oberseite der Düse (16) des Tanks angeordnet ist, wobei sich die Einzelleitersonde (3) durch die Düse (16) hindurch in Richtung des im Tank enthaltenen Produkts und in dieses hinein erstreckt, um ein gesendetes Signal (S_{T}) von dem Sendeempfänger in Richtung einer Oberfläche des Produkts zu leiten und um ein Oberflächenechosignal (S_{R}), das aus einer Reflexion des gesendeten Signals an der Oberfläche resultiert, zurück in Richtung des Sendeempfängers zu transportieren;
eine Impedanzanpassungsanordnung (35; 40; 44; 48), die an der Sonde (3) vorgesehen ist und sich entlang eines Abschnitts der Sonde erstreckt; und
Verarbeitungsschaltungen (11), die mit dem Sendeempfänger (10) verbunden sind, zum Bestimmen des Füllstands auf der Basis des Oberflächenechosignals, wobei eine Erstreckung der Impedanzanpassungsanordnung (35; 40; 44; 48) in einer zu der Sonde (3) senkrechten Richtung sich mit zunehmendem Abstand von der Durchführung (15; 19) unterhalb der Düse (16) über einem Abstand, der wenigstens einem Viertel einer Wellenlänge des gesendeten Signals (S_{T}) entspricht, mit einer zweiten, negativen Änderungsgeschwindigkeit ändert,
**dadurch gekennzeichnet, dass**
die radiale Erstreckung der Impedanzanpassungsanordnung (35; 40; 44; 48) innerhalb der Düse (16) konstant ist oder sich mit zunehmendem Abstand von der Durchführung (15; 19) mit einer ersten Änderungsgeschwindigkeit ändert, wobei die erste Änderungsgeschwindigkeit positiver als die zweite Änderungsgeschwindigkeit ist; und
die Impedanzanpassungsanordnung innerhalb der Düse eine ausreichend große radiale Erstreckung aufweist, um einen Einfluss der Düse auf das gesendete Signal zu beseitigen oder wenigstens wesentlich zu verringern.

2. Tankanordnung nach Anspruch 1, wobei die Impedanzanpassungsanordnung (35; 40; 44; 48) dafür ausgelegt ist, einen Impedanzsprung an einer Grenzfläche zwischen der Durchführung (15; 19) und der Sonde (3) vorzusehen.

3. Tankanordnung nach Anspruch 1 oder 2, wobei die radiale Erstreckung der Impedanzanpassungsanordnung von der Durchführung bis zu einem Ende der Düse im Wesentlichen konstant ist.

4. Tankanordnung nach einem der vorhergehenden Ansprüche, wobei unterhalb der Düse (16) die Erstreckung der Impedanzanpassungsanordnung (35; 40; 44; 48) in der zu der Sonde (3) senkrechten Richtung mit zunehmendem Abstand von der Durchführung (15; 19) nichtlinear abnimmt.

5. Tankanordnung nach einem der vorhergehenden Ansprüche, wobei die Impedanzanpassungsanordnung (35; 40; 44; 48) die Sonde (3) wenigstens teilweise umgibt.

6. Tankanordnung nach einem der vorhergehenden Ansprüche, wobei die Erstreckung der Impedanzanpassungsanordnung (35; 44; 48) in der zu der Sonde (3) senkrechten Richtung unterhalb der Düse (16) kontinuierlich abnimmt.

7. Tankanordnung nach einem der Ansprüche 1 bis 5, wobei die Erstreckung der Impedanzanpassungsanordnung (40) in der zu der Sonde (3) senkrechten Richtung unterhalb der Düse (16) stufenweise abnimmt.

8. Tankanordnung nach Anspruch 7, wobei jede Stufe eine Länge entlang der Sonde (3) aufweist, die im Wesentlichen einem Viertel einer Wellenlänge bei einer Mittenfrequenz des gesendeten Signals (S_{T}) entspricht.

9. Tankanordnung nach einem der vorhergehenden Ansprüche, wobei die Impedanzanpassungsanordnung (35; 40) ein dielektrisches Material umfasst.

10. Tankanordnung nach Anspruch 9, wobei die Impedanzanpassungsanordnung (35; 40) aus einem dielektrischen Material hergestellt ist.

11. Tankanordnung nach einem der Ansprüche 1 bis 9, wobei die Impedanzanpassungsanordnung (44; 48) ein leitendes Element (44; 49a-b) umfasst.

12. Tankanordnung nach Anspruch 11, wobei das leitende Element (44; 49a-b) als eine Metallplatte mit mehreren darin ausgebildeten Ausschnitten (45) vorgesehen ist.

## Revendications

1. Dispositif de réservoir comprenant :
un réservoir (5) ayant une buse (16) ; et
un système de jauge de niveau radar (1) pour déterminer un niveau de remplissage (7) d'un produit (6) contenu dans ledit réservoir (5), ledit système de jauge de niveau radar (1) comprenant :
un émetteur-récepteur (10) disposé à l'extérieur dudit réservoir pour générer, transmettre et recevoir des signaux électromagnétiques ;
une sonde à conducteur unique (3) disposée à l'intérieur dudit réservoir et connectée électriquement audit émetteur-récepteur via une traversée (15 ; 19) disposée au sommet de la buse (16) dudit réservoir, ladite sonde à conducteur unique (3) s'étendant à travers la buse (16) vers et dans ledit produit contenu dans le réservoir, pour guider un signal transmis (S_{T}) dudit émetteur-récepteur vers une surface dudit produit et pour renvoyer un signal d'écho de surface (S_{R}) résultant de la réflexion dudit signal transmis au niveau de ladite surface vers ledit émetteur-récepteur ;
un dispositif de concordance d'impédance (35 ; 40 ; 44 ; 48) prévu sur la sonde (3) et s'étendant le long d'une portion de la sonde ; et
des circuits de traitement (11) connectés audit émetteur-récepteur (10) pour déterminer ledit niveau de remplissage sur la base dudit signal d'écho de surface,
dans lequel une extension dudit dispositif de concordance d'impédance (35 ; 40 ; 44 ; 48) dans une direction perpendiculaire à ladite sonde (3) varie à mesure que la distance augmente par rapport à la traversée (15 ; 19) avec un second taux de variation négatif au-dessous de ladite buse (16) sur une distance correspondant à au moins un quart d'une longueur d'onde du signal transmis (S_{T}),
**caractérisé en ce que**
l'extension radiale du dispositif de concordance d'impédance (35 ; 40 ; 44 ; 48) est constante ou varie par rapport à la traversée (15 ; 19) avec un premier taux de variation à l'intérieur de ladite buse (16), ledit premier taux de variation étant plus positif que ledit second taux de variation ; et
ledit dispositif de concordance d'impédance, à l'intérieur de ladite buse, a une extension radiale suffisamment grande pour réduire ou réduire au moins significativement une influence de ladite buse sur ledit signal transmis.

2. Dispositif de réservoir selon la revendication 1, dans lequel ledit dispositif de concordance d'impédance (35 ; 40 ; 44 ; 48) est configuré pour fournir une étape d'impédance au niveau d'une interface entre ladite traversée (15 ; 19) et ladite sonde (3).

3. Dispositif de réservoir selon la revendication 1 ou 2, dans lequel l'extension radiale dudit dispositif de concordance d'impédance est substantiellement constante à partir de ladite traversée vers une extrémité de ladite buse.

4. Dispositif de réservoir selon une quelconque des revendications précédentes, dans lequel, au-dessous de ladite buse (16), ladite extension dans la direction perpendiculaire à la sonde (3) du dispositif de concordance d'impédance (35 ; 40 ; 44 ; 48) diminue de manière non linéaire à mesure que la distance augmente par rapport à ladite traversée (15 ; 19).

5. Dispositif de réservoir selon une quelconque des revendications précédentes, dans lequel ledit dispositif de concordance d'impédance (35 ; 40 ; 44 ; 48) entoure au moins partiellement ladite sonde (3).

6. Dispositif de réservoir selon une quelconque des revendications précédentes, dans lequel ladite extension du dispositif de concordance d'impédance (35 ; 44 ; 48) dans ladite direction perpendiculaire à ladite sonde (3), diminue en continu au-dessous de la buse (16).

7. Dispositif de réservoir selon une quelconque des revendications 1 à 5, dans lequel ladite extension du dispositif de concordance d'impédance (40), dans ladite direction perpendiculaire à ladite sonde (3), diminue par étapes au-dessous de la buse (16).

8. Dispositif de réservoir selon la revendication 7, dans lequel chaque étape a une longueur le long de la sonde (3) correspondant à un quart d'une longueur d'onde à une fréquence centrale du signal transmis (S_{T}).

9. Dispositif de réservoir selon une quelconque des revendications précédentes, dans lequel ledit dispositif de concordance d'impédance (35 ; 40) comprend un matériau diélectrique.

10. Dispositif de réservoir selon la revendication 9, dans lequel ledit dispositif de concordance d'impédance (35 ; 40) est constitué d'un matériau diélectrique.

11. Dispositif de réservoir selon une quelconque des revendications 1 à 9, dans lequel ledit dispositif de concordance d'impédance (44 ; 48) comprend un élément conducteur (44 ; 49a-b).

12. Dispositif de réservoir selon la revendication 11, dans lequel ledit élément conducteur (44 ; 49a-b) est prévu comme une plaque de métal ayant une pluralité de découpes (45) formées dans celle-ci.
